# EUROPEAN PATENT APPLICATION

(11) **EP 4 597 529 A1**
(43) Date of publication of application: **06.08.2025**
(21) Application number: 23871420.8
(22) Date of filing: 26.07.2023
(51) Int. Cl.: H01G 9/00, H01G 9/028, H01G 9/035, H01G 9/145, H01G 9/15

(54) **ELECTROLYTIC CAPACITOR AND METHOD FOR MANUFACTURING SAME**

(30) Priority: 29.09.2022 JP 2022156708
(71) Applicant: Elna Co., Ltd., Tokyo 104-0031 (JP)
(72) Inventor: SOMEI, Hidenori, Nishishirakawa-gun, Fukushima 961-8031 (JP); YAMADA, Kazuki, Nishishirakawa-gun, Fukushima 961-8031 (JP)
(74) Representative: Müller-Boré & Partner Patentanwälte PartG mbB
(86) International application number: PCT/JP2023/027392
(87) International publication number: WO 2024/070177

(57) **Abstract**

An electrolytic capacitor includes a capacitor element including: a wound body prepared by winding an anode foil subjected to etching treatment and a cathode foil with a separator holding a conductive polymer interposed therebetween; and a pair of extraction electrodes connected to the anode foil and the cathode foil. The ratio of the weight of the conductive polymer and a liquid organic material in the capacitor element to the weight of the capacitor element exclusive of lead portions of the pair of extraction electrodes is 2.0 to 20.1 wt%.

## Description

### Technical Field

The present invention relates to an electrolytic capacitor and a method for manufacturing the same.

### Background Art

For example, Patent Literature 1 describes an electrolytic capacitor manufactured by: preparing a wound body including anode foil having a surface roughened by etching treatment, a dielectric layer formed on the roughened surface, and a conductive polymer film formed on a surface of the dielectric layer; and immersing the wound body in an electrolyte solution having the ability to repair the dielectric layer. The electrolytic capacitor of this type is referred to, for example, as a hybrid electrolytic capacitor, is compact and has high capacitance with a low ESR (Equivalent Series Resistance), and is widely used, for example, for vehicle-mounted electronic components.

### Background Art Literature

### Patent Literature

Patent Literature 1: International Publication No. 2017/090241

### Summary of the Invention

### Problems to Be Solved by the Invention

A countless number of small holes called, for example, pits are formed on the surface of the anode foil by etching treatment. The dielectric layer is formed on the inner walls of the pits, and fine defects in the dielectric layer are repaired by the electrolyte solution filled into the pits.

However, when the wound body is immersed in a dispersion liquid or solution of the conductive polymer in a process for manufacturing the electrolytic capacitor, if a separator of the wound body is impregnated with an excessively large amount of the conductive polymer, a large amount of the conductive polymer may aggregate after the wound body dries, causing the openings of the pits to clog. When the openings of the pits are clogged, the pits are not filled with the electrolyte solution, and this results in a reduction in capacitance.

If the pits are not filled with the electrolyte solution, the ability to repair fine defects in the dielectric layer decreases, and the number of fine defects in the dielectric layer increases. In this case, a leakage current may occur, and the ESR may increase. By reducing the amount of the conductive polymer, the fillability of the pits with the electrolyte solution can be improved. However, since the amount of the conductive polymer is reduced, the ESR may increase. Also, by performing the etching treatment such that the openings of the pits are enlarged, the fillability of the pits with the electrolyte solution can be improved. However, since the number of pits decreases, the capacitance may decrease.

The present invention has been made in view of the foregoing problems, and an object is to provide a low-ESR electrolytic capacitor that can have an increased capacitance and a method for manufacturing the electrolytic capacitor.

### Means for Solving the Problems

The electrolytic capacitor of the present invention includes a capacitor element including: a wound body prepared by winding an anode foil and a cathode foil with a separator holding a conductive polymer interposed therebetween; and a pair of extraction electrodes connected to the anode foil and the cathode foil, characterized in that a ratio of a weight of the conductive polymer and a liquid organic material in the capacitor element to a weight of the capacitor element exclusive of lead portions of the pair of extraction electrodes is 2.0 to 20.1 wt%.

In the electrolytic capacitor, the ratio of the weight of the conductive polymer and the liquid organic material to the weight of the capacitor element exclusive of the lead portions of the pair of extraction electrodes may be 9.1 wt% or less.

In the electrolytic capacitor, the ratio of the weight of the conductive polymer and the liquid organic material to the weight of the capacitor element exclusive of the lead portions of the pair of extraction electrodes may be 8.6 wt% or less.

In the electrolytic capacitor, the ratio of the weight of the conductive polymer and the liquid organic material to the weight of the capacitor element exclusive of the lead portions of the pair of extraction electrodes may be 2.9 wt% or more.

In the electrolytic capacitor, the ratio of the weight of the conductive polymer and the liquid organic material to the weight of the capacitor element exclusive of the lead portions of the pair of extraction electrodes may be 3.2 wt% or more.

In the electrolytic capacitor, the separator may have a thickness of 1 to 100 µm.

In the electrolytic capacitor, the anode foil may have a thickness of 5 to 200 µm.

The electrolytic capacitor manufacturing method of the invention includes: the step of manufacturing a capacitor element including a wound body prepared by winding an anode foil and a cathode foil with a separator interposed therebetween and a pair of extraction electrodes; the step of immersing the wound body in a dispersion liquid or solution containing a conductive polymer and a liquid organic material; and the step of drying the wound body, characterized in that, in the step of immersing the wound body, an amount of the dispersion liquid or solution is adjusted such that a ratio of a weight of the conductive polymer and the liquid organic material to a weight of the capacitor element exclusive of lead portions of the pair of extraction electrodes is 2.0 to 20.1 wt% after the step of drying the wound body.

In the manufacturing method, the amount of the dispersion liquid or solution may be adjusted in the step of immersing the wound body such that the ratio of the weight of the conductive polymer and the liquid organic material to the weight of the capacitor element exclusive of the lead portions of the pair of extraction electrodes is 9.1 wt% or less after the step of drying the wound body.

In the manufacturing method, the amount of the dispersion liquid or solution may be adjusted in the step of immersing the wound body such that the ratio of the weight of the conductive polymer and the liquid organic material to the weight of the capacitor element exclusive of the lead portions of the pair of extraction electrodes is 8.6 wt% or less after the step of drying the wound body.

In the manufacturing method, the amount of the dispersion liquid or solution may be adjusted in the step of immersing the wound body such that the ratio of the weight of the conductive polymer and the liquid organic material to the weight of the capacitor element exclusive of the lead portions of the pair of extraction electrodes is 2.9 wt% or more after the step of drying the wound body.

In the manufacturing method, the amount of the dispersion liquid or solution may be adjusted in the step of immersing the wound body such that the ratio of the weight of the conductive polymer and the liquid organic material to the weight of the capacitor element exclusive of the lead portions of the pair of extraction electrodes is 3.2 wt% or more after the step of drying the wound body.

In the manufacturing method, a concentration of the dispersion liquid or solution may be 0.1 to 5.0 wt%.

In the manufacturing method, the separator may have a thickness of 1 to 100 µm.

In the manufacturing method, the anode foil may have a thickness of 5 to 200 µm.

### Effects of the Invention

According to the present invention, the capacitance of the capacitor element can be increased while its ESR is reduced.

### Brief Description of the Drawings

[FIG. 1] is a side view showing an example of an aluminum electrolytic capacitor.
[FIG. 2] is a perspective view showing an example of a capacitor element.
[FIG. 3] is a cross-sectional view showing part of a cross section taken along line A-A in FIG. 2.
[FIG. 4] is cross-sectional views each schematically showing part of the boundary between an etched layer and a separator when the amount of a conductive polymer is appropriate.
[FIG. 5] is cross-sectional views each schematically showing part of the boundary between the etched layer and the separator when the amount of the conductive polymer is excessively large.
[FIG. 6] is a plan view showing an example of an extraction electrode.
[FIG. 7] is a flowchart showing an example of a process for manufacturing an aluminum electrolytic capacitor.

### Mode for Carrying Out the Invention

### (Embodiments)

### (Configuration of aluminum electrolytic capacitor)

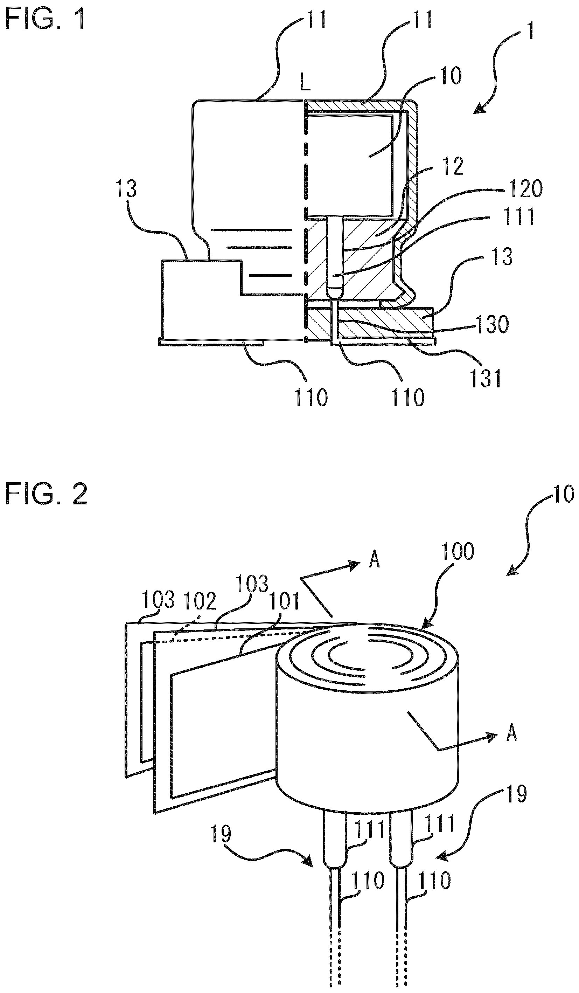

FIG. 1 is a side view showing an example of an aluminum electrolytic capacitor 1. In the drawing sheet of FIG. 1, a cross section of the inner side of the aluminum electrolytic capacitor 1 is shown in the right half with respect to a center line L.

The aluminum electrolytic capacitor 1 is an example of an electrolytic capacitor and is specifically a conductive polymer hybrid aluminum electrolytic capacitor. The aluminum electrolytic capacitor 1 is to be mounted on an electronic circuit board and is used, for example, for coupling, decoupling, or smoothing.

The aluminum electrolytic capacitor 1 includes a capacitor element 10, a case 11, a sealing body 12, a seat plate 13, a pair of round rod portions 111, and a pair of lead portions 110. The round rod portions 111 and the lead portions 110 are extraction electrodes of the capacitor element 10, and the lead portions 110 extend from the tips of the round rod portions 111. It should be noted that in FIG. 1, only one of the round rod portions 111 is shown. However, the other round rod portion 111 is disposed at a position symmetric with respect to the center line L.

The case 11 is formed of aluminum and has a cylindrical shape with a closed upper opening. The case 11 covers the capacitor element 10 and the sealing body 12 and functions as the exterior of the aluminum electrolytic capacitor 1. It should be noted that the shape of the case 11 is not limited to the cylindrical shape and may be a polygonal cylinder shape.

The sealing body 12 is a roughly circular member formed of an elastic material such as butyl rubber. The sealing body 12 is adjacent to the capacitor element 10 and seals a lower opening of the case 11.

The capacitor element 10 has a configuration including an anode foil, a cathode foil, and separators (electrolytic paper) that are stacked and wound together. The pair of round rod portions 111 extend from the bottom of the capacitor element 10.

The round rod portions 111 and the lead portions 110 are bar-like members formed of, for example, aluminum. The pair of round rod portions 111 are joined to the anode foil and the cathode foil through joining means such as caulking and function as anode and cathode terminals of the aluminum electrolytic capacitor 1. The round rod portions 111 are inserted, respectively, into a pair of through holes 120 formed in the sealing body 12. It should be noted that in FIG. 1, only one of the through holes 120 is shown. However, the other through hole 120 is disposed at a position symmetric with respect to the center line L.

The lead portions 110 each have a flat plate shape and are bent into an L shape, and their tip portions extend along the plate surface of the seat plate 13. Portions of the lead portions 110 that are located on the round rod portion 111 side are inserted into respective through holes 130 of the seat plate 13. The lead portions 110 are to be soldered to pads on an electric circuit board in an electric circuit board reflow process.

The seat plate 13 is a plate-shaped member formed of, for example, a resin and is disposed under the case 11 and the sealing body 12. The seat plate 13 supports the case 11 and the sealing body 12 on an electric circuit board on which parts are to be mounted. The seat plate 13 has through holes 130 for the lead portions 110 and groove parts 131 for receiving the bent tip portions of the lead portions 110. The groove parts 131 extend outward from the vicinities of the center of the seat plate 13 along the bottom face of the seat plate 13. The bottom face of the seat plate 13 serves as a mounting face of the aluminum electrolytic capacitor 1 when it is mounted on the electric circuit board, and the plate-shaped lead portions 110 can be soldered to the pads on the electric circuit board. It should be noted that in the present embodiment, the aluminum electrolytic capacitor 1 is of the surface mounting type. However, Examples described later are applicable to lead types with no seat plate 13.

### (Configuration of capacitor element)

FIG. 2 is a perspective view showing an example of the capacitor element 10. In FIG. 2, components common to those in FIG. 1 are denoted by the same symbols, and their description will be omitted. The capacitor element 10 includes: a wound body 100 including an anode foil 101, a cathode foil 102, and separators (electrolytic paper sheets) 103 that are wound together; and a pair of extraction electrodes 19 connected to the anode foil 101 and the cathode foil 102.

The pair of extraction electrodes 19 extend downward from the wound body 100. The round rod portion 111 of each of the extraction electrodes 19 is connected to the anode foil 101 or the cathode foil 102. It should be noted that in the state shown in FIG. 2, the lead portions 110 are unbent.

The anode foil 101 and the cathode foil 102 are formed, for example, of a foil of a valve metal such as aluminum, tantalum, titanium, niobium, or an alloy foil thereof or a vapor-deposited foil of any be these metals. The surface of the anode foil 101 has been subjected to etching treatment in order to increase the area of the electrode. This ensures that the capacitor element 10 has a prescribed capacitance. Further, a very thin oxide film is formed on the surface of the anode foil 101. The anode foil 101 is thereby insulated from other members. The oxide film functions as a dielectric, and this allows the capacitor element 10 to function as a capacitor. The thickness of the anode foil 101 is, for example, 5 to 200 (µm). This thickness range is preferred because an appropriately balanced relation can be achieved between the strength of the anode foil 101 and the amount of capacitance developed.

On the other hand, no oxide film is formed on the surface of the cathode foil 102. It should be noted that the surface of the cathode foil 102 may be subjected to etching treatment. Also, an oxide film may be formed on the surface of the cathode foil 102, or an inorganic layer or a carbon layer may be formed on the surface of the cathode foil 102.

The separators 103 are interposed between the anode foil 101 and the cathode foil 102 and wound together therewith. The separators 103 are formed of a material containing at least one selected from cellulose, rayon, glass fibers, etc. The wound body 100 prepared by winding the anode foil 101, the cathode foil 102, and the separators 103 together is immersed in a dispersion liquid or solution of an electrolyte solution and a conductive polymer in a process for manufacturing the aluminum electrolytic capacitor 1. The thickness of the separators 103 is, for example, 1 to 100 (µm). This thickness range is preferred because the strength, insulation properties, and porosity of the separator 103 and the conductive materials are well-balanced.

The electrolyte solution may contain a polyhydric alcohol, a sulfone compound, a lactone compound, a carbonate compound, a diether compound of a polyhydric alcohol, a monohydric alcohol, etc. Any of them may be used alone, or a combination of two or more may be used.

Preferably, the polyhydric alcohol contains, for example, at least one of ethylene glycol, diethylene glycol, triethylene glycol, propylene glycol, butanediol, polyalkylene glycol, and glycerin. The polyalkylene glycol used is preferably polyethylene glycol having an average molecular weight of 200 to 1000 or polypropylene glycol having an average molecular weight of 200 to 5000.

The lactone compound used may be γ-butyrolactone, γ-valerolactone, etc. The carbonate compound may contain, as a solvent, dimethyl carbonate, diethyl carbonate, ethyl methyl carbonate, ethylene carbonate, propylene carbonate, fluoroethylene carbonate, etc. **In** particular, it is desirable to use ethylene glycol, polyalkylene glycol, γ-butyrolactone, or sulfolane. The electrolyte solution may contain a solute. The solute used may be an acid component, a base component, a salt of an acid component and a base component, a nitro compound, a phenol compound, etc.

The acid component used may be an organic acid, an inorganic acid, or a composite compound of an organic acid and an inorganic acid. The organic acid used may be a carboxylic acid such as phthalic acid, isophthalic acid, terephthalic acid, maleic acid, succinic acid, glutaric acid, adipic acid, benzoic acid, 4-hydroxybenzoic acid, 1,6-decanedicarboxylic acid, 1,7-octanedicarboxylic acid, or azelaic acid. The inorganic acid used may be boric acid, phosphoric acid, phosphorous acid, hypophosphorous acid, phosphate, or phosphodiester.

The composite compound of an organic acid and an inorganic acid may be borodisalicylic acid, borodioxalic acid, or borodiglycolic acid.

The base component used may be any of primary to tertiary amines, quaternary ammoniums, and quaternized amidiniums. Examples of the primary to tertiary amines that can be used include methylamine, dimethylamine, trimethylamine, ethylamine, diethylamine, triethylamine, ethylenediamine, N,N-diisopropylethylamine, tetramethylethylenediamine, hexamethylenediamine, and aniline. Examples of the quaternary ammoniums that can be used include tetramethylammonium, triethylmethylammonium, and tetraethylammonium. Examples of the quaternized amidiniums that can be used include ethyldimethylimidazolinium and tetramethylimidazolinium.

No particular limitation is imposed on the conductive polymer so long as it is a polymer having conductivity. The conductive polymer used is, for example, at least one polymer selected from the group consisting of polythiophene, polypyrrole, polyaniline, and derivatives thereof. The conductive polymer used is generally polyethylenedioxythiophene (PEDOT) using at least one acid, as a dopant, selected from the group consisting of p-toluenesulfonic acid, polystyrene sulfonate (PSS), etc.

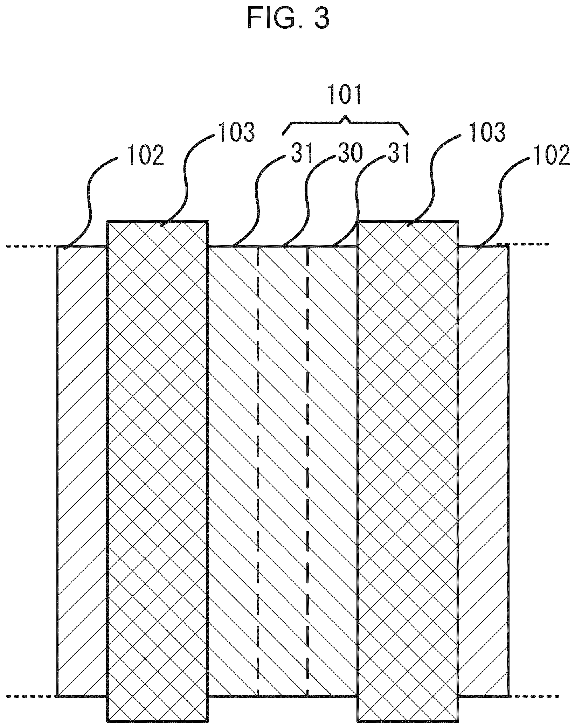

FIG. 3 is a cross-sectional view showing part of a cross section taken along line A-A in FIG. 2. The separators 103 are held between the anode foil 101 and the cathode foil 102. The anode foil 101 includes etched layers 31 adjacent to the separators 103 on both sides and an aluminum layer 30 between the etched layers 31. It should be noted that in this example, the thickness of the cathode foil 102 is smaller than the thickness of the anode foil 101.

The separators 103 function as holding layers of the conductive polymer. As described below, the electrical properties of the aluminum electrolytic capacitor 1 are affected by the amount of the conductive polymer in the separators 103.

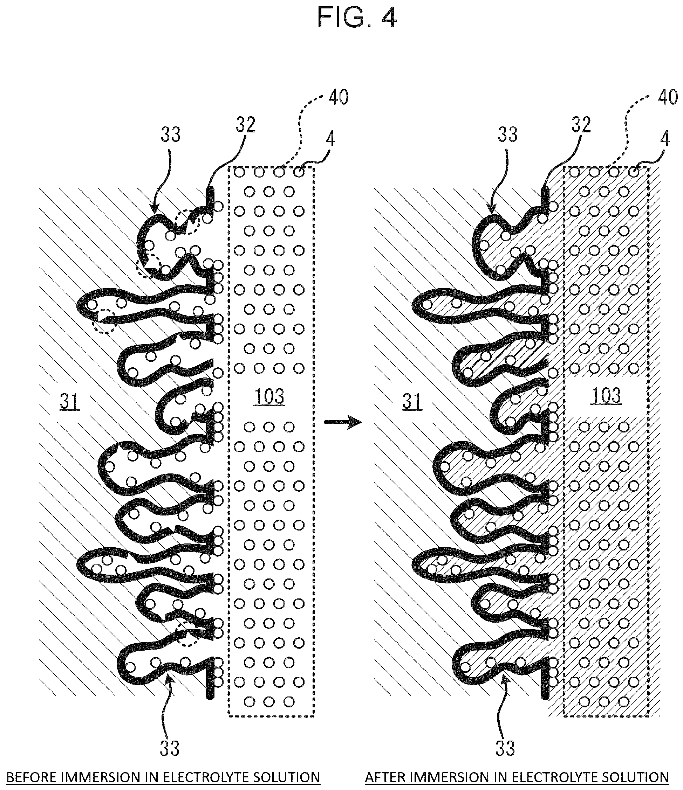

FIG. 4 is a cross-sectional view schematically showing part of the boundary between an etched layer 31 and a separator 103 when the amount of the conductive polymer is appropriate. The left side of the drawing sheet of FIG. 4 shows the state of the capacitor element 10 after it has been immersed in a dispersion liquid or solution of the conductive polymer but before it is immersed in the electrolyte solution in a method for manufacturing the aluminum electrolytic capacitor 1. On the other hand, the right side of the drawing sheet of FIG. 4 shows the state of the capacitor element 10 after it has been immersed in the electrolyte solution in the method for manufacturing the aluminum electrolytic capacitor 1.

A large number of pits 33 are formed on the surface of the etched layer 31 by etching treatment. Moreover, a dielectric layer 32, which is an oxide film, is formed on the surface of the etched layer 31 that includes the inner walls of the pits 33. As shown by dotted circles, fine defects formed during the manufacturing process and use after the manufacturing are present in the dielectric layer 32.

In addition, as a result of the immersion of the capacitor element 10 in the dispersion liquid or solution of the conductive polymer, a large number of nanoparticles 4 of the conductive polymer are held in the separator 103. After the immersion of the capacitor element 10 in the dispersion liquid or solution of the conductive polymer, the capacitor element 10 is dried, and the nanoparticles 4 thereby aggregate to form a conductive polymer layer 40.

Here, a part of the nanoparticles 4 enter the pits 33 and adhere to the etched layer 31 inside the pits 33, etc. Also, another part of the nanoparticles 4 adhere to the vicinities of the openings of the pits 33.

When the capacitor element 10 is immersed in the electrolyte solution (see the shaded area), not only the separator 103 but also the pits 33 are filled with the electrolyte solution. When a voltage is applied to the aluminum electrolytic capacitor 1, the electrolyte solution repairs the fine defects in the dielectric layer 32. Specifically, aluminum exposed in the fine defect portions comes into contact with the electrolyte solution. When the voltage is applied, chemical conversion proceeds, and the oxide film is formed again.

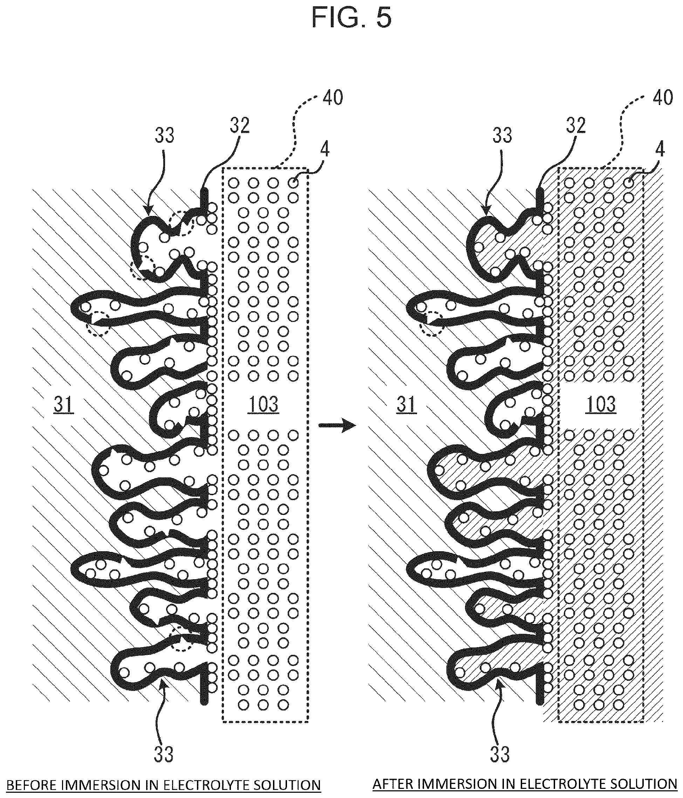

FIG. 5 is a cross-sectional view schematically showing part of the boundary between the etched layer 31 and the separator 103 when the amount of the conductive polymer is excessively large. The left side of the drawing sheet of FIG. 5 shows the state of the capacitor element 10 after it has been immersed in the dispersion liquid or solution of the conductive polymer but before it is immersed in the electrolyte solution in the manufacturing process of the aluminum electrolytic capacitor 1. On the other hand, the right side of the drawing sheet of FIG. 5 shows the state of the capacitor element 10 after it has been immersed in in the electrolyte solution in the manufacturing process of the aluminum electrolytic capacitor 1. It should be noted that in FIG. 5, the same symbols are used for the components common to those in FIG. 4, and their description is omitted.

In this example, the capacitor element 10 is immersed in the dispersion liquid or solution containing a larger amount of the conductive polymer than that in the example in FIG. 4. In this case, the number of nanoparticles 4 of the conductive polymer in the separator 103 is larger, and the density of the nanoparticles 4 is higher. As a result, the conductive polymer layer 40 is thicker, and the openings of some of the pits 33 are clogged with the nanoparticles 4 adhering thereto. Therefore, even when the capacitor element 10 is immersed in the electrolyte solution, it is not easy for the electrolyte solution to pass through the conductive polymer layer 40, and some pits 33 are not filled with the electrolyte solution.

No electrolyte solution is present in these pits 33, and the dielectric layer 32 is not electrically connected to the cathode foil 102, so that the capacitance of the aluminum electrolytic capacitor 1 decreases. Also, in this case, a leakage current (LC) may occur because no oxide film is formed in fine defect portions of the dielectric layer 32, and there is also a risk that the LC in the aluminum electrolytic capacitor 1 will increase. In addition, the fillability of the pits 33 with the electrolyte solution can be improved by performing the etching treatment such that the openings of the pits are enlarged. However, in this case, the number of pits 33 decreases, so that the capacitance may decrease.

Therefore, the aluminum electrolytic capacitor 1 is manufactured such that the ratio of the weight of the conductive polymer and a liquid organic material in the capacitor element 10 to the weight of the capacitor element 10 exclusive of the lead portions 110 (the ratio is hereinafter referred to as the polymer weight ratio) is 2.0 to 20.1 (wt%). Here, the liquid organic material is a high-boiling point solvent that is contained in the dispersion liquid or solution of the conductive polymer and that remains in the separators 103 after the capacitor element is immersed in the dispersion liquid or solution of the conductive polymer and dried in the manufacturing process of the aluminum electrolytic capacitor 1. The high-boiling point solvent is a solvent having a boiling point of 220°C of higher, and examples thereof include, but are not limited to, diethylene glycol, triethylene glycol, polyethylene glycol, polyethylene glycol monoalkyl ether, and polyethylene glycol dialkyl ether. The dispersion liquid or solution of the conductive polymer may also contain water, but the water will evaporate during drying after the immersion.

The polymer weight ratio is preferably 9.1 (wt%) or less and more preferably 8.6 (wt%) or less. In this range, the efficiency of impregnation with the electrolyte solution after impregnation with the conductive polymer can be increased. Also, the polymer weight ratio is preferably 2.9 (wt%) or more and more preferably 3.2 (wt%) or more. In this range, the low ESR in the aluminum electrolytic capacitor 1 due to the formation of the conductive polymer layer can be maintained.

In addition, the reason that the polymer weight ratio is defined using the weight of the capacitor element 10 exclusive of the lead portions 110 is as follows.

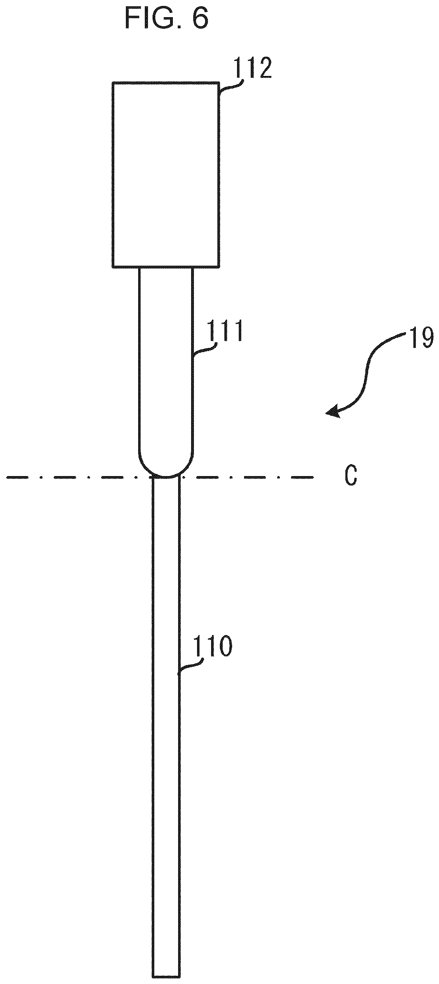

FIG. 6 is a plan view showing an example of the extraction electrodes 19. The extraction electrodes 19 each include a flat portion 112, a round rod portion 111, and a lead portion 110.

The flat portion 112 is a flat plate-shaped portion disposed at one end of the round rod portion 111 that is opposite to the lead portion 110 and is formed, for example, by pressing the one end of the round rod portion 111. The flat portion 112 is caulked and connected to the anode foil 101 or the cathode foil 102 and is not exposed to the outside because it is located inside the wound body 100.

The weight of the capacitor element 10 is defined as the value in the state in which the lead portions 110 are cut from the ends of the round rod portions 111 along a cutting line C. The length of the lead portions 110 is determined according to the type of product etc. Therefore, by cutting the lead portions 110 from the capacitor element 10, the influence of the length of the lead portions 110 on the weight of the capacitor element 10 can be eliminated when the polymer weight ratio is computed.

### (Process for manufacturing electrolytic capacitor)

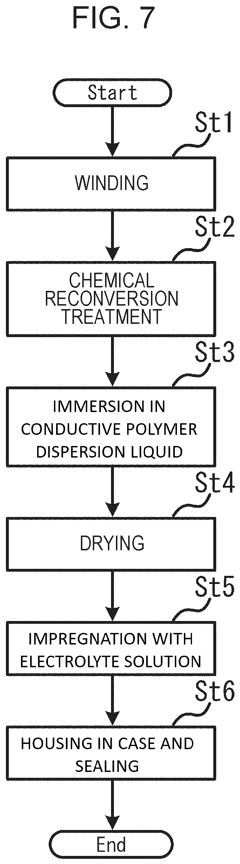

FIG. 7 is a flowchart showing an example of the process for manufacturing the aluminum electrolytic capacitor 1. When the aluminum electrolytic capacitor 1 is manufactured, the anode foil 101, the cathode foil 102, the separators 103, etc. are prepared. For example, the thickness of the anode foil 101 is 5 to 200 (µm), and the thickness of the separators is 1 to 100 (µm). Pits 33 have been formed on the surface of the anode foil 101 and the surface of the cathode foil 102 by etching treatment. The anode foil 101 has been subjected to chemical conversion treatment, and an oxide film dielectric layer 32 has been formed on the surface subjected to the etching treatment. Also, the pair of extraction electrodes 19 have been connected to the anode foil 101 and the cathode foil 102. Examples of the means for connecting the extraction electrodes 19 include, but are not limited to, caulking.

First, the anode foil 101, a separator 103, the cathode foil 102, and another separator 103 are stacked in this order and wound together, and the outer surface is fixed with a winding-head fixing tape to thereby produce the wound body 100 (step St1). Step St1 is an example of the step of manufacturing the capacitor element 10. Next, the wound body 100 is immersed in, for example, an aqueous ammonium phosphate solution, and chemical reconversion treatment is performed while a prescribed voltage is applied to the anode foil 101 to repair the oxide film, and the dielectric layer 32 is thereby formed on cut ends and on surfaces of the anode foil 101 (step St2).

Next, the wound body 100 is immersed in a dispersion liquid of the conductive polymer in a reduced pressure atmosphere to impregnate the wound body 100 with the dispersion liquid (step St3). It should be noted that alternatively, the wound body 100 may be immersed in a solution containing the conductive polymer instead of the conductive polymer dispersion liquid. Next, the wound body 100 is dried (step St4). In this case, the liquid organic material contained in the dispersion liquid or solution is retained as a residue in the capacitor element 10.

The amount of the dispersion liquid or solution of the conductive polymer in the process of step St4 is pre-adjusted such that the polymer weight ratio to be measured after the completion of this step is 2.0 to 20.1 (wt%). In this manner, the capacitance can be increased while an increase in the ESR of the aluminum electrolytic capacitor 1 is prevented. Here, the polymer weight ratio is preferably 9.1 (wt%) or less and more preferably 8.6 (wt%) or less. Further, the polymer weight ratio is preferably 2.9 (wt%) or more and more preferably 3.2 (wt%) or more. Also, the concentration of the dispersion liquid or solution of the conductive polymer is 0.1 to 5.0 (wt%).

Next, the capacitor element 10 is impregnated with the electrolyte solution in a reduced pressure atmosphere (step St5). Then the capacitor element 10 is housed in the case 11 and sealed with the sealing body 12 (step St6). In this case, the extraction electrodes 19 extending from the capacitor element 10 are inserted into the through holes 120 of the sealing body 12. Then aging treatment may be performed while a rated voltage is applied to the aluminum electrolytic capacitor 1. The process for manufacturing the aluminum electrolytic capacitor 1 is performed in the manner described above.

### Examples

Samples No. 1 to No. 38 of aluminum electrolytic capacitors 1 were manufactured according to the manufacturing method described above. Samples No. 1 to No. 19 are aluminum electrolytic capacitors 1 with a rated voltage of 25 V and a rated capacitance of 470 µF, and samples No. 20 to No. 38 are aluminum electrolytic capacitors 1 with a rated voltage of 63 V and a rated capacitance of 56 µF. The size of the cases of samples No. 1 to No. 38 is 10 (mm) in diameter × 10 (mm) in length. Also, the voltage applied to the capacitor element 10 in the chemical reconversion treatment was 56 (V) for samples No. 1 to No. 19 and 143 (V) for samples No. 20 to No. 38.

When the capacitor element 10 was immersed in the dispersion liquid of the conductive polymer, the amount of the dispersion liquid used was adjusted such that the polymer weight ratio was 1.7 to 21.5 (wt%). Different polymer weight ratios were used for different samples No. 1 to No. 38. Each capacitor element 10 was impregnated with a prescribed amount of the electrolyte solution in a reduced pressure atmosphere.

### (Evaluation)

The capacitance and ESR of each of samples No. 1 to No. 38 of the aluminum electrolytic capacitors 1 were measured. An LCR meter for four-terminal measurement was used to measure the capacitance (initial capacitance) (µF) of the electrolytic capacitor at a frequency of 120 Hz and the ESR (initial ESR) (mΩ) of the electrolytic capacitor at a frequency of 100 kHz.

**[Table 1]**

| Ratings: 25 V 470 µF | | | | |
|---|---|---|---|---|
| Sample No. | Polymer weight ratio (wt%) | Capacitance (µF) | ESR (Ω) | Evaluation |
| 1 | 1.8 | 463.4 | 0.0217 | NG |
| 2 | 2.0 | 464.6 | 0.0195 | OK |
| 3 | 2.9 | 460.5 | 0.0113 | OK |
| 4 | 3.2 | 463.2 | 0.0105 | OK |
| 5 | 3.5 | 461.7 | 0.0089 | OK |
| 6 | 4.0 | 462.6 | 0.0085 | OK |
| 7 | 4.6 | 459.7 | 0.0084 | OK |
| 8 | 5.1 | 463.2 | 0.0083 | OK |
| 9 | 5.4 | 459.4 | 0.0083 | OK |
| 10 | 5.6 | 462.9 | 0.0082 | OK |
| 11 | 6.3 | 461.3 | 0.0085 | OK |
| 12 | 7.2 | 462.6 | 0.0085 | OK |
| 13 | 7.7 | 462.6 | 0.0085 | OK |
| 14 | 8.2 | 463.2 | 0.0079 | OK |
| 15 | 8.6 | 455.8 | 0.0086 | OK |
| 16 | 9.1 | 445.4 | 0.0097 | OK |
| 17 | 9.5 | 441.9 | 0.0100 | OK |
| 18 | 20.1 | 433.9 | 0.0192 | OK |
| 19 | 21.5 | 429.5 | 0.0225 | NG |

Table 1 shows the evaluation results for samples No. 1 to No. 15 of the aluminum electrolytic capacitors 1 with a rated voltage of 25 V and a rated capacitance of 470 µF. In Table 1, the polymer weight ratio (wt%), the capacitance (µF), the ESR (Ω), and the evaluation result for each of samples No. 1 to No. 15 are shown. The polymer weight ratio was computed using the weight of the conductive polymer and the weight of the organic material in the capacitor element 10 exclusive of the lead portions 110 of the pair of extraction electrodes 19. Also, as for the evaluation criteria, a sample with, for example, a capacitance of 430 (µF) or more and an ESR of 0.020 (Ω) or less was evaluated as OK, and a sample that did not meet these conditions was evaluated as NG. These criteria are determined according to prescribed specifications.

The polymer weight ratio of sample No. 19 is larger than those of other samples (No. 2 to No. 18). Therefore, the amount of the conductive polymer held in the separator was excessively large. In this case, the openings of many pits 33 were clogged with nanoparticles 4 of the conductive polymer, and these pits 33 were not sufficiently filled with the electrolyte solution, as described with reference to FIG. 5. This may be the reason that the capacitance was lower than those of other samples No. 2 to No. 18. Therefore, the judgment result for sample No. 19 was NG.

Also, the polymer weight ratio of sample No. 1 is smaller than those of the other samples (No. 2 to No. 19). Therefore, the amount of the conductive polymer held in the separator was small. In this case, the number of pits 33 whose openings were clogged with nanoparticles 4 of the conductive polymer was small, and the pits 33 were filled with a sufficient amount of the electrolyte solution, so that the capacitance obtained was sufficient. However, since the amount of the conductive polymer was excessively small, the ESR was high. Therefore, the judgment result for sample No. 1 was NG.

In samples No. 2 to No. 18, the polymer weight ratio is 2.0 to 20.1 (wt%) and is larger than the polymer weight ratio of sample No. 1, i.e., 1.8 (wt%) and smaller than the polymer weight ratio of sample No. 19, i.e., 21.5 (wt%). Therefore, the amount of the conductive polymer held in the separator was smaller than that held in sample No. 19, so that the conductive polymer layer 40 had an appropriate thickness. In this case, the number of pits 33 whose openings were clogged with nanoparticles 4 of the conductive polymer was small, and the pits 33 were filled with a sufficient amount of the electrolyte solution, so that the capacitance obtained was sufficient. On the other hand, since the amount of the conductive polymer was larger than that in sample No. 1, the ESR was low. Therefore, the judgment results for samples No. 2 to No. 18 were OK.

**[Table 2]**

| Ratings: 63 V 56 µF | | | | |
|---|---|---|---|---|
| Sample No. | Polymer weight ratio (wt%) | Capacitance (µF) | ESR (Ω) | Evaluation |
| 20 | 1.7 | 54.9 | 0.0221 | NG |
| 21 | 2.1 | 54.6 | 0.0195 | OK |
| 22 | 2.8 | 54.3 | 0.0161 | OK |
| 23 | 3.3 | 54.4 | 0.0154 | OK |
| 24 | 3.8 | 54.0 | 0.0155 | OK |
| 25 | 4.5 | 53.9 | 0.0151 | OK |
| 26 | 5.0 | 53.9 | 0.0149 | OK |
| 27 | 5.3 | 53.9 | 0.0139 | OK |
| 28 | 5.6 | 53.7 | 0.0139 | OK |
| 29 | 5.9 | 53.5 | 0.0133 | OK |
| 30 | 6.2 | 53.4 | 0.0136 | OK |
| 31 | 6.8 | 53.4 | 0.0135 | OK |
| 32 | 7.5 | 53.2 | 0.0131 | OK |
| 33 | 8.1 | 53.1 | 0.0134 | OK |
| 34 | 8.5 | 52.7 | 0.0139 | OK |
| 35 | 9.2 | 52.0 | 0.0152 | OK |
| 36 | 9.6 | 51.3 | 0.0157 | OK |
| 37 | 19.9 | 50.2 | 0.0189 | OK |
| 38 | 20.7 | 49.3 | 0.0204 | NG |

Table 2 shows the evaluation results for samples No. 20 to No. 38 of the aluminum electrolytic capacitors 1 with a rated voltage of 63 V and a rated capacitance of 56 µF. In Table 2, the polymer weight ratio (wt%), the capacitance (µF), the ESR (Ω), and the evaluation result for each of samples No. 20 to No. 38 are shown. The polymer weight ratio was computed using the weight of the conductive polymer and the weight of the organic material in the capacitor element 10 exclusive of the lead portions 110 of the pair of extraction electrodes 19. Also, as for the judgment criteria, a sample with, for example, a capacitance of 50 (µF) or more and an ESR of 0.02 (Ω) or less was evaluated as OK, and a sample that did not meet these conditions was evaluated as NG. These criteria are determined according to prescribed specifications.

The polymer weight ratio of sample No. 38 is larger than those of other samples No. 20 to No. 37. Therefore, the amount of the conductive polymer held in the separator was excessively large. In this case, the openings of many pits 33 were clogged with nanoparticles 4 of the conductive polymer, and these pits 33 were not sufficiently filled with the electrolyte solution, as described with reference to FIG. 5. This may be the reason that the capacitance was lower than those of other samples No. 20 to No. 37. Therefore, the judgment result for sample No. 38 was NG.

Also, the polymer weight ratio of sample No. 20 is smaller than those of the other samples No. 21 to No. 38. Therefore, the amount of the conductive polymer held in the separator was small. In this case, the number of pits 33 whose openings were clogged with nanoparticles 4 of the conductive polymer was small, and the pits 33 were filled with a sufficient amount of the electrolyte solution, so that the capacitance obtained was sufficient. However, since the amount of the conductive polymer was excessively small, the ESR was high. Therefore, the judgment result for sample No. 20 was NG.

In addition, in samples No. 21 to No. 37, the polymer weight ratio is 2.1 to 19.9 (wt%) and is larger than the polymer weight ratio of sample No. 20, i.e., 1.7 (wt%) and smaller than the polymer weight ratio of sample No. 38, i.e., 20.7 (wt%). Therefore, the amount of the conductive polymer held in the separator was smaller than that held in sample No. 38, so that the conductive polymer layer 40 had an appropriate thickness. In this case, the number of pits 33 whose openings were clogged with nanoparticles 4 of the conductive polymer was small, and the pits 33 were filled with a sufficient amount of the electrolyte solution, so that the capacitance obtained was sufficient. On the other hand, since the amount of the conductive polymer was larger than that in sample No. 20, the ESR was low. Therefore, the judgment results for samples No. 21 to No. 37 were OK.

As described above, in the Examples, the ratio of the weight of the polymer to the weight of the capacitor element 10 exclusive of the lead portions 110 of the pair of extraction electrodes 19 is 2.0 to 20.1 (wt%). In this manner, the capacitance can be increased while the increase in the ESR of the aluminum electrolytic capacitor 1 is suppressed. To further reduce the ESR, it is preferable that the polymer weight ratio is 9.1 (wt%) or less and more preferably 8.6 (wt%) or less. Also, the polymer weight ratio is preferably 2.9 (wt%) or more and more preferably 3.2 (wt%) or less. It should be noted that in the Examples, the conductive polymer dispersion liquid was used. However, even when a solution of the conductive polymer was used, the same results as those described above were obtained.

### (Method for computing polymer weight ratio)

A method for computing the polymer weight ratio will next be described. The case is separated from the aluminum electrolytic capacitor 1, and the capacitor element 10 is removed. Nippers, for example, are used to cut the lead portions 110 of the pair of extraction electrodes 19 of the capacitor element 10 at the bases of the round rod portions 111. It should be noted that the lead portions 110 are cut along the cutting line C shown in FIG. 7.

The capacitor element 10 is immersed in distilled water at 40°C and left to stand for 1 hour. The electrolyte solution in the capacitor element 10 is extracted into the distilled water and is thereby removed from the capacitor element 10. The capacitor element 10 with the electrolyte solution removed therefrom is dried at 100°C for 1 hour to transpire[check word; it appears 2 more times] the distilled water, and the whole weight of the capacitor element 10 at this point is measured.

The dried capacitor element 10 is disassembled and separated into the anode foil 101, the cathode foil 102, the two separators 103, the anode and cathode extraction electrodes 19 from which the lead portions 110 have been cut, and the element fastening tape (not shown). The anode foil 101, the cathode foil 102, the two separators 103, the anode and cathode extraction electrodes 19, and the element fastening tape are each subjected to thermal analysis in an oxygen atmosphere using a thermal analysis apparatus (Tg-DTA: Thermogravimetry Differential Thermal Analysis). In this case, the conductive polymer undergoes thermal decomposition at a specific temperature to form a gas such as SO₂, causing a reduction in weight. The weight of the conductive polymer contained in the capacitor element 10 can thereby be measured.

The high-boiling point solvent for the conductive polymer dispersion liquid also transpires at a specific temperature, causing a reduction in weight. The weight of the high-boiling point solvent contained in the capacitor element 10 can thereby be measured. The reduction of the total weight of the conductive polymer and the high-boiling point solvent at each component of the capacitor element 10 obtained as described above is used as the weight of the conductive polymer dispersion liquid. The ratio of the weight of the conductive polymer dispersion liquid to the whole weight of the capacitor element 10 dried after the electrolyte solution has been washed out is computed as the polymer weight ratio.

The Examples of the invention have been described in detail. However, the invention is not limited to the specific Examples, and various modifications and changes can be made within the scope of the gist of the present invention described in the claims.

## Claims

1. An electrolytic capacitor comprising a capacitor element including: a wound body prepared by winding an anode foil and a cathode foil with a separator holding a conductive polymer interposed therebetween; and a pair of extraction electrodes connected to the anode foil and the cathode foil,
**characterized in that** a ratio of a weight of the conductive polymer and a liquid organic material in the capacitor element to a weight of the capacitor element exclusive of lead portions of the pair of extraction electrodes is 2.0 to 20.1 wt%.

2. The electrolytic capacitor according to claim 1, **characterized in that** the ratio of the weight of the conductive polymer and the liquid organic material to the weight of the capacitor element exclusive of the lead portions of the pair of extraction electrodes is 9.1 wt% or less.

3. The electrolytic capacitor according to claim 1, **characterized in that** the ratio of the weight of the conductive polymer and the liquid organic material to the weight of the capacitor element exclusive of the lead portions of the pair of extraction electrodes is 8.6 wt% or less.

4. The electrolytic capacitor according to claim 1, **characterized in that** the ratio of the weight of the conductive polymer and the liquid organic material to the weight of the capacitor element exclusive of the lead portions of the pair of extraction electrodes is 2.9 wt% or more.

5. The electrolytic capacitor according to claim 1, **characterized in that** the ratio of the weight of the conductive polymer and the liquid organic material to the weight of the capacitor element exclusive of the lead portions of the pair of extraction electrodes is 3.2 wt% or more.

6. The electrolytic capacitor according to any of claims 1 to 5, **characterized in that** the separator has a thickness of 1 to 100 µm.

7. The electrolytic capacitor according to any of claims 1 to 5, **characterized in that** the anode foil has a thickness of 5 to 200 µm.

8. A method for manufacturing an electrolytic capacitor, the method comprising:
the step of manufacturing a capacitor element including a wound body prepared by winding an anode foil and a cathode foil with a separator interposed therebetween and a pair of extraction electrodes;
the step of immersing the wound body in a dispersion liquid or solution containing a conductive polymer and a liquid organic material; and
the step of drying the wound body,
**characterized in that**, in the step of immersing the wound body, an amount of the dispersion liquid or solution is adjusted such that a ratio of a weight of the conductive polymer and the liquid organic material to a weight of the capacitor element exclusive of lead portions of the pair of extraction electrodes is 2.0 to 20.1 wt% after the step of drying the wound body.

9. The method for manufacturing an electrolytic capacitor according to claim 8, **characterized in that** the amount of the dispersion liquid or solution is adjusted in the step of immersing the wound body such that the ratio of the weight of the conductive polymer and the liquid organic material to the weight of the capacitor element exclusive of the lead portions of the pair of extraction electrodes is 9.1 wt% or less after the step of drying the wound body.

10. The method for manufacturing an electrolytic capacitor according to claim 8, **characterized in that** the amount of the dispersion liquid or solution is adjusted in the step of immersing the wound body such that the ratio of the weight of the conductive polymer and the liquid organic material to the weight of the capacitor element exclusive of the lead portions of the pair of extraction electrodes is 8.6 wt% or less after the step of drying the wound body.

11. The method for manufacturing an electrolytic capacitor according to claim 8, **characterized in that** the amount of the dispersion liquid or solution is adjusted in the step of immersing the wound body such that the ratio of the weight of the conductive polymer and the liquid organic material to the weight of the capacitor element exclusive of the lead portions of the pair of extraction electrodes is 2.9 wt% or more after the step of drying the wound body.

12. The method for manufacturing an electrolytic capacitor according to claim 8, **characterized in that** the amount of the dispersion liquid or solution is adjusted in the step of immersing the wound body such that the ratio of the weight of the conductive polymer and the liquid organic material to the weight of the capacitor element exclusive of the lead portions of the pair of extraction electrodes is 3.2 wt% or more after the step of drying the wound body.

13. The method for manufacturing an electrolytic capacitor according to any of claims 8 to 12, **characterized in that** a concentration of the dispersion liquid or solution is 0.1 to 5.0 wt%.

14. The method for manufacturing an electrolytic capacitor according to any of claims 8 to 12, **characterized in that** the separator has a thickness of 1 to 100 µm.

15. The method for manufacturing an electrolytic capacitor according to any of claims 8 to 12, **characterized in that** the anode foil has a thickness of 5 to 200 µm.
